# EUROPEAN PATENT SPECIFICATION

(11) **EP 3 393 195 B1**
(45) Date of publication and mention of the grant of the patent: **12.08.2020**
(21) Application number: 16875571.8
(22) Date of filing: 12.12.2016
(51) Int. Cl.: H04W 76/15, H04W 48/16, H04W 84/12, H04W 92/18

(54) **INFORMATION PROCESSING DEVICE, NETWORK CONNECTION SYSTEM AND NETWORK CONNECTION METHOD**
INFORMATIONSVERARBEITUNGSVORRICHTUNG, NETZWERKVERBINDUNGSSYSTEM UND NETZWERKVERBINDUNGSVERFAHREN
DISPOSITIF DE TRAITEMENT D'INFORMATIONS, SYSTÈME DE CONNEXION DE RÉSEAU ET PROCÉDÉ DE CONNEXION DE RÉSEAU

(30) Priority: 14.12.2015 JP 2015243321; 02.05.2016 JP 2016092283
(43) Date of publication of application: 24.10.2018
(73) Proprietor: Yamaha Corporation, Hamamatsu-shi, Shizuoka 430-8650 (JP)
(72) Inventor: SUYAMA Akihiko, Hamamatsu-shi Shizuoka 430-8650 (JP); MUSHIKABE Kazuya, Hamamatsu-shi Shizuoka 430-8650 (JP); TSUKADA Keisuke, Hamamatsu-shi Shizuoka 430-8650 (JP)
(74) Representative: Ettmayr, Andreas
(86) International application number: PCT/JP2016/086851
(87) International publication number: WO 2017/104594

(56) References cited:
- WO-A1-2006/062034
- JP-A- 2010 028 171
- JP-A- 2012 060 351
- JP-A- 2014 241 487
- JP-A- 2016 178 412
- US-A1- 2007 086 394
- US-A1- 2010 115 262
- US-A1- 2013 250 358
- US-A1- 2014 007 209

## Description

### Technical Field

The present invention relates to an information processing apparatus, a network connection system, and a network connection method that operate an external device connected to a wireless network.

### Background Art

Patent Literature 1 discloses a network audio system that uses a wireless LAN (Local Area Network). The audio system disclosed in Patent Literature 1 is configured such that a storage device, a player, and the like that have stored sound data are connected through the wireless LAN (or a wired LAN) and transmit and receive the sound data.

### Citation List

### Patent Literature

Patent Literature 1: Japanese Unexamined Patent Application Publication No. 2007-158854

Document US 2014 / 0 007 209 A1 discloses a system for transmitting user credentials to another device. Document US 2010 / 0 115 262 A1 discloses a wireless network system, in which a wireless network mode of a client is started in an AdHoc mode and infrastructure network information including a network name and an encryption key is transmitted form a user device to the client.

### Summary of the Invention

### Technical Problem

Each device connected to the wireless LAN is able to share predetermined information. However, in a case of desiring to make a device that is not connected to the wireless LAN share the same data, it is necessary to newly connect the device to the wireless LAN and to transmit data desired to be shared to the device through a network.

In view of the foregoing, an object of a preferred embodiment of the present invention is to provide an information processing apparatus that enables an external device that is connected to a wireless network and an external device that is not connected to the wireless network to share information, a network connection system provided with such an information processing apparatus, and a network connection method.

### Solution to Problem

The above-mentioned problem is solved with the features of the independent claims.

With the configuration according to the present invention, even if the second external device is not connected to the wireless network, the setting information of the first external device may be transmitted to the second external device without connecting the second external device to the wireless network. As a result, the first external device and the second external device may be caused to share setting information.

### Advantageous Effects of Invention

According to the present invention, it is possible to cause a second external device that is not connected to a wireless network to share setting information of a first external device that is connected to the wireless network.

### Brief Description of the Drawings

Fig. 1 is a diagram illustrating a configuration of an audio system according to a preferred embodiment.
Fig. 2A is a block diagram illustrating a configuration of a content storage device and Fig. 2B is a block diagram illustrating a configuration of a content playing device.
Fig. 3 illustrates network connection information.
Fig. 4 is a block diagram illustrating a configuration of a portable terminal.
Fig. 5 is a diagram for illustrating a connection setting method at a time of newly adding a content storage device.
Fig. 6 is a diagram for illustrating a display image that is displayed on a display portion at a time of performing connection setting by a portable terminal.
Fig. 7 is a flow chart illustrating a process when the portable terminal obtains network connection information.
Fig. 8 is a flow chart illustrating a process when the portable terminal sets connection to a content storage device.

### Detailed Description of Preferred Embodiments

As described above, an information processing apparatus according to a preferred embodiment of the present invention includes: a first communication portion communicating with a first external device that has established a connection to a wireless network; a setting information reception portion receiving setting information that the first external device stores from the first external device through the first communication portion; a second communication portion communicating with a second external device that has not established a connection to the wireless network; and a transmission portion transmitting the setting information that the setting information reception portion has received to the second external device through the second communication portion.

The information processing apparatus according to this embodiment of the present invention is in the following modes.

The setting information is connection information in order that the first external device establishes a connection to a wireless relay apparatus in the wireless network, and the transmission portion transmits the connection information that the setting information reception portion has obtained from the first external device to the second external device.

With this configuration, the connection information that the first external device stores, is transmitted to the second external device, and when the second external device reflects the connection information, the second external device may be connected to a wireless relay apparatus of the wireless network. As a result, even if a user does not perform operation of manually registering the connection information to the second external device, the second external device may be connected to the wireless relay apparatus of the wireless network.

In addition, the information processing apparatus is characterized in a wireless relay apparatus obtaining portion obtaining a plurality of wireless relay apparatuses in the wireless network that the second external device has recognized; a display portion displaying the plurality of wireless relay apparatuses that the wireless relay apparatus obtaining portion has obtained; a selection portion selecting one wireless relay apparatus among the plurality of wireless relay apparatuses that have been displayed by the display portion, and the setting information reception portion obtaining the connection information corresponding to the wireless relay apparatus that the selection portion selects from the first external device.

With this configuration, in a case in which a plurality of wireless relay apparatuses to which the second external device may be connected are present, by selecting one wireless relay apparatus, the second external device may be easily connected to a selected wireless relay apparatus. In a case of selecting a wireless relay apparatus, the wireless relay apparatus may be automatically selected according to wireless wave strength, if the same thing (the same SSID) as what is in the connection information is present, the SSID may be automatically selected, or a user may manually select.

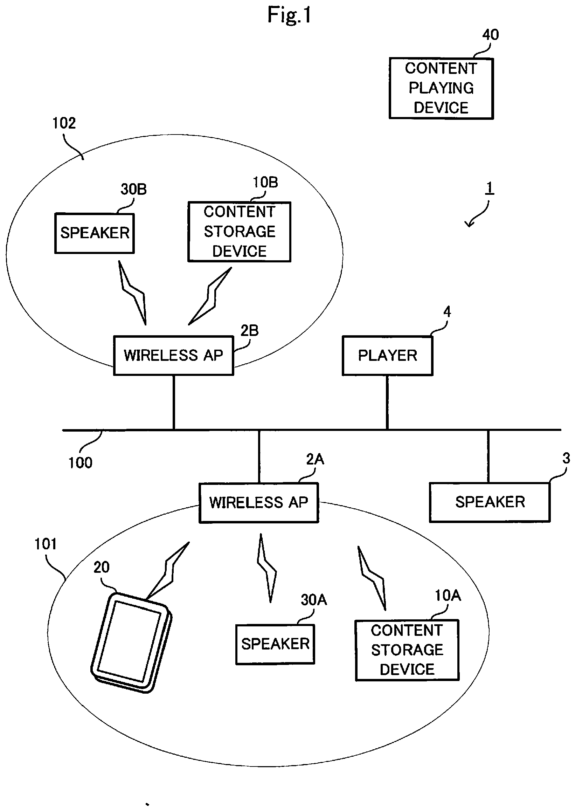

Fig. 1 is a diagram illustrating a configuration of an audio system 1 according to a present preferred embodiment. The audio system 1 corresponds to an exemplary "network connection system".

The audio system 1 is provided with wireless access points (hereinafter referred to as wireless APs) 2A and 2B, a speaker 3, a player 4, and the like that are connected to a wired LAN 100 wired in a building. Each of the devices, such as the wireless APs 2A and 2B to be connected to the wired LAN 100, is arranged in a plurality of rooms such as a living room or a bedroom in a building.

The wireless APs 2A and 2B construct wireless LANs 101 and 102. The wireless APs 2A and 2B are connected to content storage devices 10A and 10B, a portable terminal 20 that a user owns, speakers 30A and 30B, and the like. In Fig. 1, the wireless AP 2A is connected to the portable terminal 20, the content storage device 10A, and the speaker 30A, and the wireless AP 2B is connected to the content storage device 10B, and the speaker 30B. It is to be noted that the number of wireless APs to be connected to the wired LAN 100 may be one or may be three or more.

The content storage devices 10A and 10B store content data including music data or video data. The content storage devices 10A and 10B distribute the content data mainly to the speakers 30A and 30B, the speaker 3, or the player 4 that are content playing devices. The distributed content data is played by the device of a distribution destination. In addition, the content storage devices 10A and 10B may be provided with a speaker and content data may be output from the content storage devices 10A and 10B. The content storage devices 10A and 10B, the speakers 30A and 30B, the speaker 3, or the player 4 correspond to a "first external device" according to the present invention.

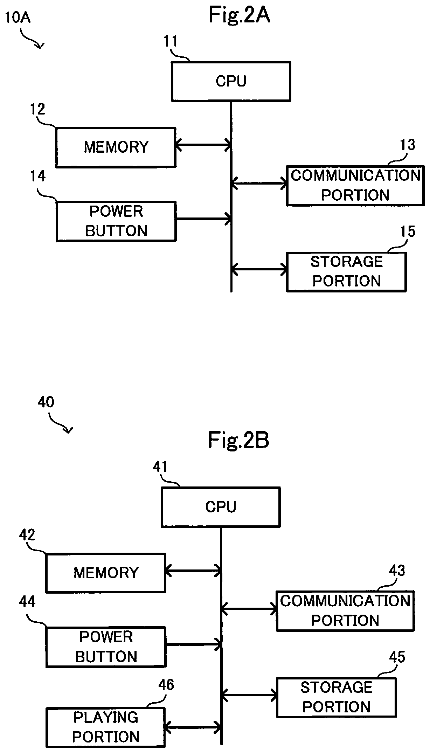

Fig. 2A is a block diagram illustrating a configuration of the content storage devices 10A and 10B. It is to be noted that the content storage device 10A and the content storage device 10B have the same configuration, and, in Fig. 2A, the content storage device 10A is illustrated as a representative. However, the content storage device 10A and the content storage device 10B may have a different configuration. Fig. 2B is a block diagram illustrating a configuration of a content playing device 40. The content playing device 40 corresponds to the speaker 30A, the speaker 30B, the speaker 3, or the player 4. The speaker 30A, the speaker 30B, the speaker 3, and the player 4, since being regarded as all having the same configuration, will be described as a content playing device 40 in Fig. 2B. However, the speakers 30A and 30B, the speaker 3, or the player 4 may have a different configuration.

The content storage devices 10A and 10B are provided with a CPU (Central Processing Unit) 11, a memory 12, a communication portion 13, a power button 14, and a storage portion 15. The communication portion 13 outputs and inputs a wireless signal in accordance with standards such as Wi-Fi (registered trademark) standards and Bluetooth (registered trademark) standard. By this communication portion 13, both the content storage devices 10A and 10B are able to communicate with each of the wireless APs 2A and 2B, and the portable terminal 20. The power button 14 is a button that turns on or off the power of the content storage devices 10A and 10B.

The memory 12 is a RAM (Random Access Memory) and a ROM (Read Only Memory). The memory 12 stores a program that the CPU 11 executes, a calculation processing result, data that the communication portion 13 receives, and the like.

The CPU 11 reads a program from the memory 12 and executes the read program. The "setting information first transmission portion" according to the present invention is implemented by executing the program stored in the memory 12 by the CPU 11.

The storage portion 15 is an HDD (Hard Disk Drive) or an SSD (Solid State Drive), for example. The storage portion 15 stores content data, network connection information, and the like. The storage portion 15 corresponds to a "setting information storage portion" according to the present invention.

As illustrated in Fig. 2B, the content playing device 40 is provided with a CPU (Central Processing Unit) 41, a memory 42, a communication portion 43, a power button 44, a storage portion 45, a playing portion 46. The communication portion 43 outputs and inputs a wireless signal in accordance with standards such as Wi-Fi (registered trademark) standards and Bluetooth (registered trademark) standard. By this communication portion 43, the content playing device 40 is able to communicate with each of the wireless APs 2A and 2B and the portable terminal 20. The power button 44 is a button that turns on or off the power of the content playing device 40.

The memory 42 is a RAM (Random Access Memory) and a ROM (Read Only Memory). The memory 42 stores a program that the CPU 41 executes, a calculation processing result, data that the communication portion 43 receives, and the like.

The CPU 41 reads a program from the memory 42 and executes the read program. The "setting information first transmission portion" according to the present invention is implemented by executing the program stored in the memory 42 by the CPU 41.

The storage portion 45 is an HDD (Hard Disk Drive) or an SSD (Solid State Drive), for example. The storage portion 45 stores content data, network connection information, and the like (setting information). The storage portion 45 corresponds to a "setting information storage portion" according to the present invention.

The playing portion 46 plays the distributed content data.

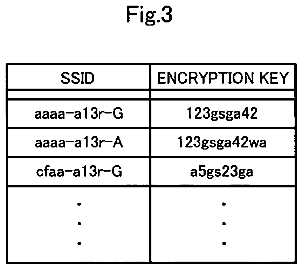

Fig. 3 illustrates network connection information.

The wireless APs 2A and 2B each have an encryption key such as a unique network name (SSID) and a WEP key. When the network name and encryption key of the wireless APs 2A and 2B to be connected are registered in the content storage devices 10A and 10B, a connection between the content storage devices 10A and 10B and the wireless APs 2A and 2B is established.

The network connection information is information in which a network name (SSID), an encryption key, and an encryption type (such as WEP, WPA, or WPA2) of the wireless APs 2A and 2B that have already been registered in the content storage devices 10A and 10B are associated with each other. However, the encryption type is not essential. The content storage devices 10A and 10B, in a case in which the connection to the wireless AP 2A and 2B is disconnected due to a reason such that the power is turned off, even if an encryption key is not reset, are reconnected to the wireless APs 2A and 2B based on the stored network connection information.

The content storage devices 10A and 10B in the audio system 1 store the network connection information with the same content. For example, when the network connection information that the content storage device 10A stores is updated due to a reason such that the AP to be connected is changed, the content storage device 10A transmits the updated network connection information to the content storage device 10B. The content storage device 10B updates the network connection information that the own device stores. As a result, the content storage devices 10A and 10B share the network connection information with the same content. In a case in which a plurality of content playing devices (or content storage devices) are present, all the content playing devices each transmit the network connection information to one another to share the network connection information.

It is to be noted that the audio system 1 may be provided with a content storage device directly connected to the wired LAN 100. Even in such a case, the content storage device stores the same network connection information as the network connection information that the content storage devices 10A and 10B store.

The portable terminal 20 is a smartphone, a tablet, a personal computer, or the like. The portable terminal 20 corresponds to an "information processing apparatus" according to the present invention. The portable terminal 20 operates the speaker 30A or the content storage device 10A in the same wireless LANs 101 and 102. In addition, the portable terminal 20 operates other devices, the speaker 30B, the content storage device 10B, the speaker 3, or the player 4 through the wireless AP 2A.

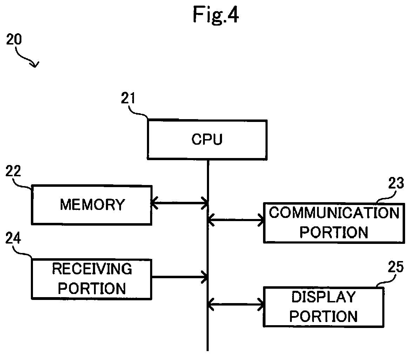

Fig. 4 is a block diagram illustrating a configuration of the portable terminal 20.

The portable terminal 20 is provided with a CPU 21, a memory 22, a communication portion 23, a receiving portion 24, and a display portion 25. The communication portion 23 outputs and inputs a wireless signal in accordance with standards such as Wi-Fi (registered trademark) standards and Bluetooth (registered trademark) standard. By this communication portion 23, the portable terminal 20 is able to communicate with the wireless APs 2A and 2B and the content storage devices 10A and 10B. The communication portion 23 corresponds to a "first communication portion" and a "second communication portion" according to the present invention. The receiving portion 24 receives an operation by a user. The receiving portion 24 may be an operation button or may be a touch panel. The receiving portion 24 corresponds to a "selection portion" according to the present invention. The display portion 25 mainly displays an operation screen of each device.

The memory 22 is a RAM and a ROM. The memory 22 stores a program that the CPU 21 executes, a calculation processing result, information that the communication portion 23 receives, and the like.

The CPU 21 reads a program from the memory 22 and executes the read program. The "setting information reception portion," the "transmission portion," the "wireless relay apparatus obtaining portion," the "connection information obtaining portion," and the "setting information second transmission portion" according to the present invention are implemented by executing the program stored in the memory 22 by the CPU 21.

This portable terminal 20 is able to operate the content playing device 40 (see Fig. 1) that is connected to neither the wired LAN 100 nor the wireless LANs 101 and 102. For example, in a case of newly purchasing a content playing device 40 and adding the content playing device 40 to the audio system 1, it is necessary to connect the content playing device 40 to the wired LAN 100 or the wireless LANs 101 and 102. In particular, in a case of connecting to the wireless LANs 101 and 102, it is necessary to register an encryption key such as a network name (SSID) and a WEP key of the wireless APs 2A and 2B, in the content playing device 40. In the present preferred embodiment, a user registers network connection information in the content playing device 40 and can make a connection between the content playing device 40 and the wireless AP 2A (or the wireless AP 2B) established from the portable terminal 20. The content playing device 40 corresponds to a "second external device" according to the present invention.

Hereinafter, a description will be made of an exemplary connection setting method of a content playing device 40. It is to be noted that a content playing device 40 to be newly added is regarded as having the same configuration (see Fig. 2B) as the speaker 30A does and the content playing device 40 will be described by use of the reference numerals shown in Fig. 2B.

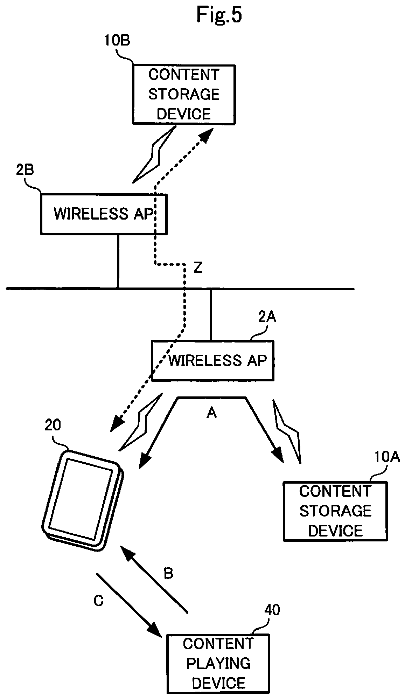

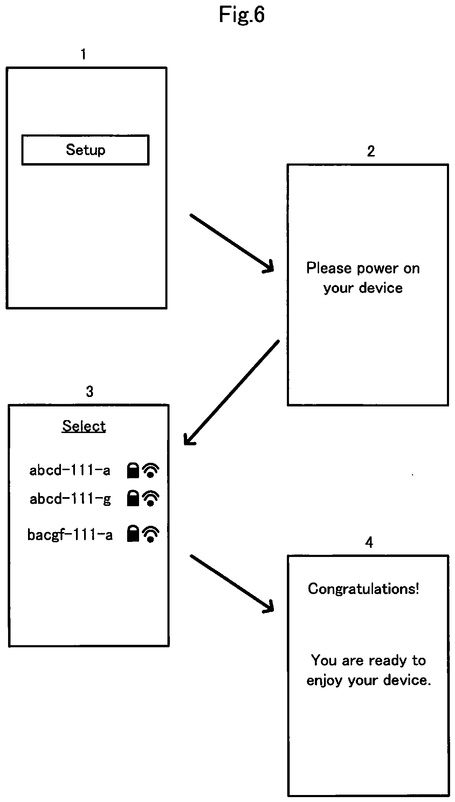

Fig. 5 is a diagram for illustrating an exemplary connection setting method at a time of newly adding a content playing device 40. Fig. 6 is a diagram for illustrating a display image that is displayed on a display portion 25 at a time of performing connection setting by a portable terminal 20.

For example, a dedicated application is installed in the portable terminal 20. A user, by running the application, can perform connection setting of a content playing device 40. When a connection setting function of the application is selected, a "Setup" button is selectively displayed on the display portion 25 of the portable terminal 20 ("1" of Fig. 6).

When the "Setup" button is selected, a message that prompts a user to press a power button (or a setting start button provided in the apparatus body) of the content playing device 40 is displayed ("2" of Fig. 6). At this time, the portable terminal 20, as illustrated in "A" of Fig. 5, obtains network connection information from the content storage device 10A through the wireless AP 2A. It is to be noted that, while the present preferred embodiment illustrates an example in which the portable terminal 20 performs display illustrated in "2" of Fig. 6 on the display portion 25 and simultaneously obtains network connection information, the network connection information may be obtained separately from the display. For example, the portable terminal 20 obtains the network connection information when starting a connection.

It is to be noted that, for example, in a case in which the power of the content storage device 10A is turned off and the portable terminal 20 is not able to communicate with the content storage device 10A, as illustrated in "Z" of Fig. 5, the portable terminal 20 may obtain the network connection information from the content storage device 10B. As described above, the content storage device 10A, the content storage device 10B, the speaker 30A, and the speaker 30B store the network connection information with the same content. Therefore, the portable terminal 20, even when being unable to communicate with the content storage device 10A, is able to obtain the network connection information with the same content even from the content storage device 10B, the speaker 30A, or the speaker 30B. It is to be noted that, even if all the devices do not share the same network connection information, the portable terminal 20 may obtain network connection information from a plurality of devices or all the devices and may obtain network connection information with respect to a target wireless AP.

In addition, in a case in which a content storage device directly connected to the wired LAN 100 is present, the portable terminal 20 may obtain network connection information from the content storage device. In such a case, when the wireless connection between the content storage devices 10A and 10B and the wireless APs 2A and 2B is unstable, the portable terminal 20 is able to more reliably obtain network connection information.

When the power button (or the setting start button) of the content playing device 40 is pressed by a user, communication between the portable terminal 20 and the content playing device 40 is started. The communication at this time is not communication through the wireless AP 2A but communication in which the portable terminal 20 and the content playing device 40 directly transmit and receive data (the content playing device 40 is temporarily serves as an AP) through Wi-Fi (registered trademark), Bluetooth (registered trademark), or the like (however, the communication, in a case in which an AP of a specific SSID is present, the AP may be preferentially connected). Then, as illustrated in "B" of Fig. 5, the portable terminal 20 obtains information (hereinafter referred to as AP information) on an access point to which the content playing device 40 is able to be connected. The AP information is information including all the SSIDs, wave strength, and encryption type that the content playing device 40 recognizes after the electric wave reaches the content playing device 40.

The portable terminal 20 selectively displays the AP information obtained from the content playing device 40 ("3" of Fig. 6). When the displayed AP information is selected by the user, the portable terminal 20 transmits the network connection information corresponding to the selected AP information to the content playing device 40 from the obtained network connection information. It is to be noted that, if there is the same SSID as the SSID of the AP information that has already been obtained, the SSID may be automatically selected.

When the network connection information transmitted from the portable terminal 20 is registered (reflected) in the content playing device 40, a connection between the content playing device 40 and the wireless AP 2A (or the wireless AP 2B) is established. The terminal 20 that has been connected to the content playing device 40 is again connected to the previously connected AP 2A, and displays a message that the connection has been established on the display portion 25 when communication with the content playing device 40 through the AP 2A has succeeded ("4" of Fig. 6). The content playing device 40, when establishing a connection to the wireless AP2A, releases a connection to the terminal 20. Alternatively, the portable terminal 20 may release a connection to the contents storage reproducing device 40 by itself.

It is to be noted that, in a case in which the selected AP information is not stored in the network connection information, the portable terminal 20 may display an error. In addition, the portable terminal 20 may automatically select, among the AP information obtained from the content playing device 40, AP information of which the wave strength is strong or AP information of a specific name (the same SSID as the SSID of the previously obtained setting information, for example). In such a case, the portable terminal 20, without displaying the screen of "3" of Fig. 6, may change the screen of "2" of Fig. 6 to the screen of "4" of Fig. 6.

Hereinafter, a description will be made of a process of the audio system 1 at a time of newly adding a content playing device 40.

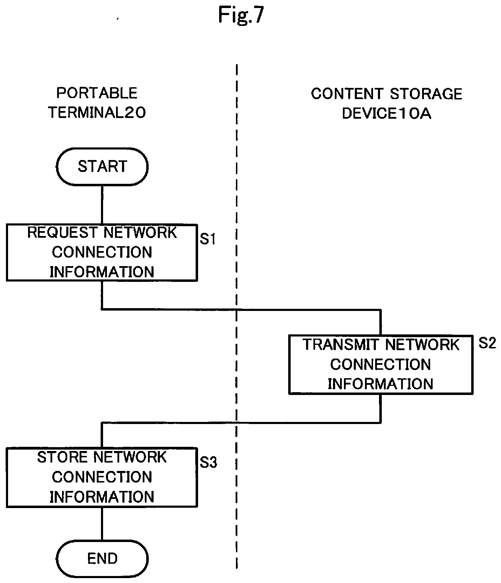

Fig. 7 is a flow chart illustrating a process when the portable terminal 20 obtains network connection information.

The CPU 21 of the portable terminal 20 makes a request to the content storage device 10A (or the content storage device 10B) for transmission of network connection information (S1). The CPU 11 of the content storage device 10A (or the content storage device 10B), receiving the request, transmits the network connection information stored in the storage portion 15 to the portable terminal 20 (S2).

The CPU 21 of the portable terminal 20 stores the network connection information received from the content storage device 10A (or the content storage device 10B) in the memory 22 (S3) .

It is to be noted that timing of executing the process as illustrated in Fig. 7 may be timing when the portable terminal 20 displays the screen of "1" of Fig. 6 or may be timing when the portable terminal 20 displays the screen of "2" of Fig. 6. In other words, the timing is any time before the portable terminal 20 is connected to the device 40 and cut off from the connection to the AP (while connected with a network).

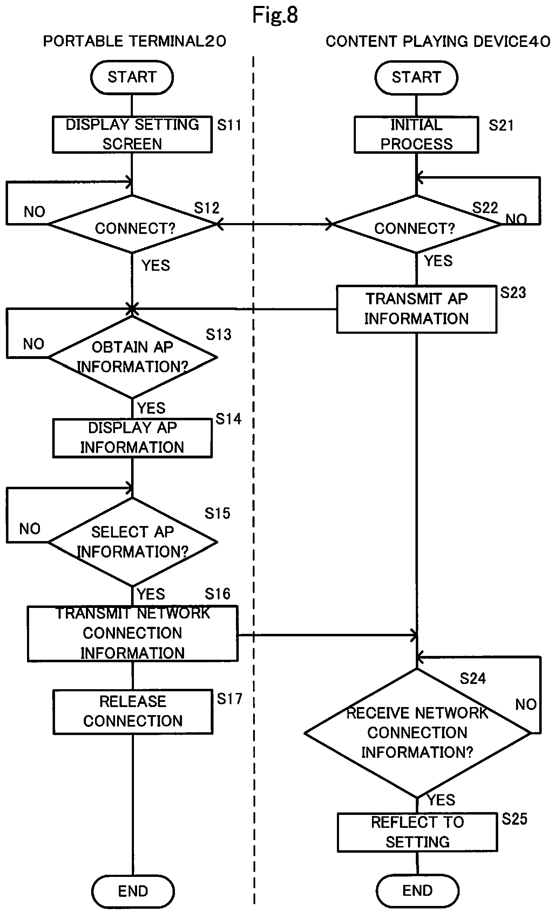

Fig. 8 is a flow chart illustrating a process when the portable terminal 20 sets connection to a content playing device 40.

In the left column of Fig. 8, the CPU 21 of the portable terminal 20 displays the setting screen illustrated in "1" of Fig. 6 and "2" of Fig. 6 (S11). Then, the CPU 21 determines whether or not the portable terminal 20 has connected to the content playing device 40 (S12). A specific operation (pressing on the setting start button, for example) is performed to the content playing device 40, and connection to the network is requested, so that the content playing device 40 sets the own device to the AP of a specific SSID. As a result, the portable terminal 20 is able to be connected to the content playing device 40. In a case of being not connected to the content playing device 40 (S12: NO), the CPU 21 reruns the process of S12. At this time, the CPU 21 may continue to display a message that prompts a user to perform a specific operation (pressing on the setting start button, for example) in the content playing device 40 or may display another error screen.

In a case of having connected to the content playing device 40 (S12: YES), the CPU 21 determines whether or not the AP information to which the content playing device 40 is able to be connected is obtained from the content playing device 40 (S13) .

In a case of not obtaining the AP information (S13: NO), the CPU 21 reruns the process of S13. In a case of having obtained the AP information (S13: YES), the CPU 21 selectively displays the obtained AP information as illustrated in "3" of Fig. 6 (S14).

The CPU 21 determines whether or not any of the displayed AP information is selected by a user (S15). In a case in which the AP information is not selected (S15: NO), the CPU 21 reruns the process of S15. It is to be noted that the portable terminal 20 may automatically select AP information of which the wave strength is the strongest. In a case in which the AP information has been selected (S15: YES), the CPU 21 transmits network connection information corresponding to the selected AP information among the network connection information obtained in the process of Fig. 7 and stored in the memory 22 to the content playing device 40 (S16). The transmitted network connection information is reflected to the setting by the content playing device 40. As a result, a connection between the content playing device 40 and the wireless AP 2A (or the wireless AP 2B) is established.

Subsequently, the CPU 21, by releasing the connection to the content playing device 40 or being released (S17), ends the present process.

Subsequently, in the right column of Fig. 8, the CPU 11 of the content playing device 40 starts an initial process when a specific operation is made by the user (S21). This initial process is executed, so that the content playing device 40 is able to communicate with the portable terminal 20. It is to be noted that, while an example in which the own device is set to the AP of a specific SSID is illustrated, the connection to the portable terminal 20 may be by Bluetooth (registered trademark) or the like, for example. The CPU 11 determines whether or not the connection to the portable terminal 20 is made (S22).

In a case of no connection to the portable terminal 20 (S22: NO), the CPU 11 reruns the process of S22. Alternatively, the CPU 11 may end with an error in a case in which success has not been made for a predetermined period of time. In a case of having connected to the portable terminal 20 (S22: YES), the CPU 11 transmits information on an access point to which the content playing device 40 is able to be connected, as AP information, to the portable terminal 20 (S23).

The CPU 11 determines whether or not the network connection information has been received from the portable terminal 20 (S24). In a case of having not received (S24: NO), the CPU 11 reruns the process of S24. In a case of having received, (S24: YES), the CPU 11 reflects the received network connection information to the setting (S25), and establishes a connection to the wireless AP 2A (or the wireless AP 2B). The CPU 11, at a time of establishing a connection, may release the connection to the terminal 20.

As described above, in the audio system 1 according to the present preferred embodiment, by previously obtaining and reflecting the latest network connection information on the content storage device 10A, the content storage device 10B, the speaker 30A, or the speaker 30B that have been already connected to the wireless LANs 101 and 102, when adding the content playing device 40 to the network, the content playing device 40 may be simply and reliably added to the audio system 1.

It is to be noted that the foregoing preferred embodiments are illustrative in all points and should not be construed to limit the present invention. The scope of the present invention is defined not by the foregoing preferred embodiment but by the following claims. For example, in the present preferred embodiment, while the access point is illustrated as an example of a wireless relay apparatus, other than this example, a wireless LAN router is also an example of a wireless relay apparatus.

### Reference Signs List

- 1 -: Audio system
- 2A, 2B -: Wireless access point
- 3 -: Speaker
- 4 -: Player
- 10A, 10B -: Content storage device
- 11 -: CPU
- 12 -: Memory
- 13 -: Communication portion
- 14 -: Power button
- 15 -: Storage portion
- 20 -: Portable terminal
- 21 -: CPU
- 22 -: Memory
- 23 -: Communication portion
- 24 -: Receiving portion
- 25 -: Display portion
- 30A, 30B -: Speaker
- 40 -: Content storage device
- 100 -: Wired LAN
- 101, 102 -: Wireless LAN

## Claims

1. An information processing apparatus (20) comprising:
a first communication portion (23) configured to communicate with a first external device that has established a connection to a wireless network;
a setting information reception portion configured to receive setting information that the first external device stores from the first external device through the first communication portion (23);
a second communication portion (23) configured to communicate with a second external device that has not established a connection to the wireless network; and
a transmission portion configured to transmit the setting information that the setting information reception portion has received to the second external device through the second communication portion (23),
**characterized in that**:
the setting information is connection information in order that the first external device establishes a connection to a wireless relay apparatus (2A, 2B) in the wireless network; and
the transmission portion being configured to transmit the connection information that the setting information reception portion has obtained from the first external device to the second external device, and
that:
a wireless relay apparatus obtaining portion is configured to obtain a plurality of wireless relay apparatuses (2A, 2B) that the second external device has recognized in the wireless network;
a display portion is configured to display the plurality of wireless relay apparatuses (2A, 2B) that the wireless relay apparatus obtaining portion has obtained;
a selection portion (24) is configured to select one wireless relay apparatus (2A, 2B) among the plurality of wireless relay apparatuses (2A, 2B) that have been displayed by the display portion, and
the setting information reception portion is configured to obtain connection information corresponding to the one wireless relay apparatus (2A, 2B) that the selection portion (24) selects from the first external device.

2. A network connection system (1) comprising:
a first external device that has established a connection to a wireless network;
an information processing apparatus (20) that is configured to communicate the first external device; and
a second external device that has not established a connection to the wireless network,
wherein:
the first external device includes:
a setting information storage portion (15) configured to store setting information; and
a setting information first transmission portion configured to transmit the setting information that the setting information storage portion (15) stores, to the information processing apparatus (20); and
wherein the information processing apparatus (20) includes:
a setting information reception portion configured to receive the setting information that the setting information first transmission portion transmits;
a communication portion configured to communicate with the second external device; and
a setting information second transmission portion configured to transmit the setting information that the setting information reception portion receives to the second external device,
**characterized in that**:
the setting information is connection information in order that the first external device establishes a connection to a specific device in the wireless network;
the information processing apparatus (20) further comprises:
a wireless relay apparatus obtaining portion configured to obtain a wireless relay apparatus (2A, 2B) that the second external device has recognized in the wireless network; and
a connection information obtaining portion configured to obtain a piece of connection information corresponding to a wireless relay apparatus (2A, 2B) that the wireless relay apparatus obtaining portion obtains, among pieces of connection information that the setting information reception portion has received; and
wherein the setting information second transmission portion is configured to transmit connection information that the connection information obtaining portion obtains to the second external device, and
that:
a wireless relay apparatus obtaining portion is configured to obtain a plurality of wireless relay apparatuses (2A, 2B) in the wireless network that the second external device has recognized;
a display portion is configured to display the plurality of wireless relay apparatuses (2A, 2B) that the wireless relay apparatus obtaining portion has obtained;
a selection portion (24) configured to select one wireless relay apparatus (2A, 2B) among the plurality of wireless relay apparatuses (2A, 2B) that have been displayed by the display portion, and
the setting information reception portion configured to obtain connection information corresponding to the one wireless relay apparatus (2A, 2B) that the selection portion (24) selects from the first external device.

3. The network connection system (1) according to claim 2, wherein the wireless relay apparatus (2A, 2B) is an access point.

4. The network connection system (1) according to any one of claims 2 to 3, wherein the setting information reception portion is configured to obtain the connection information that has been stored in the setting information storage portion (15) of the first external device when the second external device starts connection.

5. The network connection system (1) according to any one of claims 2 to 4, wherein:
the second external device is configured to cause an own device to function as a specific wireless relay apparatus (2A, 2B) ;
the communication portion is configured to connect the specific wireless relay apparatus (2A, 2B); and
the setting information second transmission portion is configured to transmit the setting information to the second external device through the communication portion after the communication portion connects with the specific wireless relay apparatus (2A, 2B).

6. A network connection method, wherein:
a first external device that has established a connection to a wireless network performs:
setting information processing of storing setting information; and
setting information first transmission processing of transmitting the setting information that has been stored in the setting information storage processing to an information processing apparatus (20); wherein
the information processing apparatus (20) that communicates with the first external device performs:
setting information reception processing of receiving the setting information that has been transmitted in the setting information first transmission processing;
communication processing of communicating with a second external device; and
setting information second transmission processing of transmitting the setting information that has been received in the setting information reception processing, to a second external device that has not established a connection to the wireless network,
**characterized in**
the setting information is connection information in order that the first external device establishes a connection to a wireless relay apparatus (2A, 2B) in the wireless network; and
the transmission portion transmits the connection information that the setting information reception portion has obtained from the first external device to the second external device, and
a wireless relay apparatus obtaining portion obtaining a plurality of wireless relay apparatuses (2A, 2B) that the second external device has recognized in the wireless network;
a display portion displaying the plurality of wireless relay apparatuses (2A, 2B) that the wireless relay apparatus obtaining portion has obtained;
a selection portion (24) selecting one wireless relay apparatus (2A, 2B) among the plurality of wireless relay apparatuses (2A, 2B) that have been displayed by the display portion, and
the setting information reception portion obtaining connection information corresponding to the one wireless relay apparatus (2A, 2B) that the selection portion (24) selects from the first external device.

## Patentansprüche

1. Eine Informationsverarbeitungsvorrichtung (20), umfassend:
einen ersten Kommunikationsabschnitt (23), der so konfiguriert ist, dass er mit einer ersten externen Vorrichtung kommuniziert, das eine Verbindung zu einem drahtlosen Netzwerk hergestellt hat;
einen Einstellinformations-Empfangsabschnitt, der so konfiguriert ist, dass er Einstellinformationen, die die erste externe Vorrichtung speichert, von der ersten externen Vorrichtung über den ersten Kommunikationsabschnitt (23) empfängt;
einen zweiten Kommunikationsabschnitt (23), der so konfiguriert ist, dass er mit einer zweiten externen Vorrichtung kommuniziert, die keine Verbindung zu dem drahtlosen Netzwerk hergestellt hat; und
einen Übertragungsabschnitt, der so konfiguriert ist, dass er die Einstellinformationen, die der Einstellinformations-Empfangsabschnitt empfangen hat, über den zweiten Kommunikationsabschnitt (23) an die zweite externe Vorrichtung überträgt,
**dadurch gekennzeichnet, dass**:
die Einstellinformation eine Verbindungsinformation ist, damit die erste externe Vorrichtung eine Verbindung zu einer drahtlosen Relaisvorrichtung (2A, 2B) in dem drahtlosen Netzwerk herstellt; und
der Übertragungsabschnitt so konfiguriert ist, dass er die Verbindungsinformationen, die der Einstellinformations-Empfangsabschnitt von der ersten externen Vorrichtung erhalten hat, an die zweite externe Vorrichtung überträgt, und
das:
ein Abschnitt zum Erhalten von drahtlosen Relaisvorrichtungen so konfiguriert ist, dass er eine Vielzahl von drahtlosen Relaisvorrichtungen (2A, 2B) erhält, die die zweite externe Vorrichtung im drahtlosen Netzwerk erkannt hat;
ein Anzeigeabschnitt so konfiguriert ist, dass er die Vielzahl von drahtlosen Relaisvorrichtungen (2A, 2B) anzeigt, die der Abschnitt zum Erhalten von drahtlosen Relaisvorrichtungen erhalten hat;
ein Auswahlabschnitt (24) so konfiguriert ist, dass er eine drahtlose Relaisvorrichtung (2A, 2B) aus der Vielzahl von drahtlosen Relaisvorrichtungen (2A, 2B) auswählt, die von dem Anzeigeabschnitt angezeigt worden sind, und
der Einstellungsinformations-Empfangsabschnitt konfiguriert ist, um Verbindungsinformationen von der ersten externen Vorrichtung zu erhalten, die der einen drahtlosen Relaisvorrichtung (2A, 2B) entsprechen, die der Auswahlabschnitt (24) auswählt.

2. Ein Netzwerkverbindungssystem (1), umfassend:
eine erste externe Vorrichtung, die eine Verbindung zu einem drahtlosen Netzwerk hergestellt hat;
eine Informationsverarbeitungsvorrichtung (20), die konfiguriert ist, um die erste externe Vorrichtung zu kommunizieren; und
eine zweite externe Vorrichtung, das keine Verbindung zum drahtlosen Netzwerk hergestellt hat,
wobei:
die erste externe Vorrichtung enthält:
einen Einstellinformations-Speicherabschnitt (15), der zum Speichern von Einstellinformationen konfiguriert ist; und
einen ersten Einstellungsinformations-Übertragungsabschnitt, der so konfiguriert ist, dass er die Einstellungsinformationen, die der Einstellungsinformationsspeicherabschnitt (15) speichert, an die Informationsverarbeitungsvorrichtung (20) überträgt; und
wobei die Informationsverarbeitungsvorrichtung (20) enthält:
einen Einstellinformations-Empfangsabschnitt, der so konfiguriert ist, dass er die Einstellinformation empfängt, die der erste Einstellungsinformations-Übertragungsabschnitt sendet;
einen Kommunikationsabschnitt, der so konfiguriert ist, dass er mit der zweiten externen Vorrichtung kommuniziert; und
einen zweiten Einstellungsinformations-Übertragungsabschnitt, der so konfiguriert ist, dass er die Einstellungsinformationen, die der Einstellungsinformations-Empfangsabschnitt empfängt, an die zweite externe Vorrichtung überträgt,
**dadurch gekennzeichnet, dass**:
die Einstellinformation eine Verbindungsinformation ist, damit die erste externe Vorrichtung eine Verbindung zu einer bestimmten Vorrichtung im drahtlosen Netzwerk herstellt;
die Informationsverarbeitungsvorrichtung (20) ferner umfasst:
einen Abschnitt zum Erhalten einer drahtlosen Relaisvorrichtung, der konfiguriert ist, um eine drahtlose Relaisvorrichtung (2A, 2B) zu erhalten, die die zweite externe Vorrichtung in dem drahtlosen Netzwerk erkannt hat; und
einen Verbindungsinformations-Erfassungsabschnitt, der so konfiguriert ist, dass er unter den Stücken von Verbindungsinformationen, die der Einstellinformations-Empfangsabschnitt empfangen hat, ein Stück von Verbindungsinformationen erfasst, das einer drahtlosen Relaisvorrichtung (2A, 2B) entspricht, die der Abschnitt zum Erhalten einer drahtlosen Relaisvorrichtung erfasst; und
wobei der zweite Einstellungsinformations-Übertragungsabschnitt so konfiguriert ist, dass er Verbindungsinformationen, die der Verbindungsinformations-Erfassungsabschnitt erhält, an die zweite externe Vorrichtung überträgt, und
das:
ein Abschnitt zum Erhalten von drahtlosen Relaisvorrichtungen so konfiguriert ist, dass er eine Vielzahl von drahtlosen Relaisvorrichtungen (2A, 2B) in dem drahtlosen Netzwerk erhält, die die zweite externe Vorrichtung erkannt hat;
ein Anzeigeabschnitt so konfiguriert ist, dass er die Vielzahl von drahtlosen Relaisvorrichtungen (2A, 2B) anzeigt, die der Abschnitt zum Erhalten von drahtlosen Relaisvorrichtungen erhalten hat;
ein Auswahlabschnitt (24) so konfiguriert ist, dass er eine drahtlose Relaisvorrichtung (2A, 2B) aus der Vielzahl von drahtlosen Relaisvorrichtungen (2A, 2B) auswählt, die von dem Anzeigeabschnitt angezeigt worden sind, und
der Einstellungsinformations-Empfangsabschnitt konfiguriert ist, um Verbindungsinformationen von der ersten externen Vorrichtung zu erhalten, die der einen drahtlosen Relaisvorrichtung (2A, 2B) entsprechen, die der Auswahlabschnitt (24) auswählt.

3. Das Netzwerkverbindungssystem (1) nach Anspruch 2, wobei die drahtlose Relaisvorrichtung (2A, 2B) ein Zugangspunkt ist.

4. Das Netzwerkverbindungssystem (1) nach einem der Ansprüche 2 bis 3, wobei der Einstellinformations-Empfangsabschnitt so konfiguriert ist, dass er die Verbindungsinformation erhält, die im Einstellinformations-Speicherabschnitt (15) der ersten externen Vorrichtung gespeichert wurde, wenn die zweite externe Vorrichtung die Verbindung beginnt.

5. Das Netzwerkverbindungssystem (1) nach einem der Ansprüche 2 bis 4, wobei:
die zweite externe Vorrichtung so konfiguriert ist, dass sie bewirkt, dass eine eigene Vorrichtung als eine spezifische drahtlose Relaisvorrichtung (2A, 2B) funktioniert;
der Kommunikationsabschnitt so konfiguriert ist, dass er die spezifische drahtlose Relaisvorrichtung (2A, 2B) verbindet; und
der zweite Einstellinformations-Übertragungsabschnitt für so konfiguriert ist, dass er die Einstellinformationen über den Kommunikationsabschnitt an die zweite externe Vorrichtung überträgt, nachdem der Kommunikationsabschnitt eine Verbindung mit der spezifischen drahtlosen Relaisvorrichtung (2A, 2B) hergestellt hat.

6. Ein Netzwerkverbindungsverfahren, wobei:
eine erste externe Vorrichtung, die eine Verbindung zu einem drahtlosen Netzwerk hergestellt hat, durchführt:
Einstellinformationsverarbeitung zum Speichern von Einstellinformationen; und
erste Einstellinformations-Sendeverarbeitung des Übertragens der Einstellinformation, die in der Einstellinformations-Speicherverarbeitung gespeichert worden ist, zu einer Informationsverarbeitungsvorrichtung (20); wobei
die Informationsverarbeitungsvorrichtung (20), die mit der ersten externen Vorrichtung kommuniziert, durchführt:
eine Einstellinformations-Empfangsverarbeitung zum Empfangen der Einstellinformation, die in der ersten Einstellinformations-Sendeverarbeitung übertragen worden ist;
Kommunikationsverarbeitung des Kommunizierens mit einer zweiten externen Vorrichtung; und
Zweite Einstellinformations-Sendeverarbeitung der Übertragung der Einstellinformationen, die in der Einstellinformations-Empfangsverarbeitung empfangen wurden, an eine zweite externe Vorrichtung, das keine Verbindung zum drahtlosen Netzwerk hergestellt hat,
**dadurch gekennzeichnet, dass**
die Einstellungsinformationen Verbindungsinformationen sind, damit die erste externe Vorrichtung eine Verbindung zu einer drahtlosen Relaisvorrichtung (2A, 2B) im drahtlosen Netzwerk herstellt; und
der Übertragungsabschnitt die Verbindungsinformationen, die der Einstellinformations-Empfangsabschnitt von der ersten externen Vorrichtung erhalten hat, an die zweite externe Vorrichtung überträgt, und
ein Abschnitt zum Erhalten von drahtlosen Relaisvorrichtungen eine Vielzahl von drahtlosen Relaisvorrichtungen (2A, 2B) erhält, die die zweite externe Vorrichtung in dem drahtlosen Netzwerk erkannt hat;
einen Anzeigeabschnitt, der die Vielzahl von drahtlosen Relaisvorrichtungen (2A, 2B) anzeigt, die der Abschnitt zum Erhalten von drahtlosen Relaisvorrichtungen erhalten hat;
einen Auswahlabschnitt (24), der eine drahtlose Relaisvorrichtung (2A, 2B) aus der Vielzahl von drahtlosen Relaisvorrichtungen (2A, 2B) auswählt, die von dem Anzeigeabschnitt angezeigt worden sind, und
der Einstellungsinformations-Empfangsabschnitt Verbindungsinformationen aus der ersten externen Vorrichtung erhält, die der einen drahtlosen Relaisvorrichtung (2A, 2B) entsprechen, die der Auswahlabschnitt (24) auswählt.

## Revendications

1. Appareil de traitement d'informations (20) comprenant :
une première partie de communication (23) configurée pour communiquer avec un premier dispositif externe qui a établi une connexion avec un réseau sans fil ;
une partie de réception d'information de réglage configurée pour recevoir une information de réglage que le premier dispositif externe stocke à partir du premier dispositif externe par l'intermédiaire de la première partie de communication (23) ;
une seconde partie de communication (23) configurée pour communiquer avec un second dispositif externe qui n'a pas établi une connexion avec le réseau sans fil ; et
une partie de transmission configurée pour transmettre l'information de réglage que la partie de réception d'information de réglage a reçue au second dispositif externe par l'intermédiaire de la seconde partie de communication (23),
**caractérisé en ce que** :
l'information de réglage est une information de connexion de manière que le premier dispositif externe établisse une connexion avec un appareil de relais sans fil (2A, 2B) dans le réseau sans fil ; et
la partie de transmission étant configurée pour transmettre l'information de connexion que la partie de réception d'information de réglage a obtenue à partir du premier dispositif externe au second dispositif externe, et
**en ce que** :
une partie d'obtention d'appareil de relais sans fil est configurée pour obtenir une pluralité d'appareils de relais sans fil (2A, 2B) que le second dispositif externe a reconnue dans le réseau sans fil ;
une partie d'affichage est configurée pour afficher la pluralité d'appareils de relais sans fil (2A, 2B) que la partie d'obtention d'appareil de relais sans fil a obtenue ;
une partie de sélection (24) est configurée pour sélectionner un appareil de relais sans fil (2A, 2B) parmi la pluralité d'appareils de relais sans fil (2A, 2B) qui a été affichée par la partie d'affichage, et
la partie de réception d'information de réglage est configurée pour obtenir une information de connexion correspondant à l'un appareil de relais sans fil (2A, 2B) que la partie de sélection (24) sélectionne à partir du premier dispositif externe.

2. Système de connexion de réseau (1) comprenant :
un premier dispositif externe qui a établi une connexion avec un réseau sans fil ;
un appareil de traitement d'informations (20) qui est configuré pour communiquer avec le premier dispositif externe ; et
un second dispositif externe qui n'a pas établi une connexion avec le réseau sans fil,
dans lequel :
le premier dispositif externe comprend :
une partie de stockage d'information de réglage (15) configurée pour stocker une information de réglage ; et
une première partie de transmission d'information de réglage configurée pour transmettre l'information de réglage que la partie de stockage d'information de réglage (15) stocke à l'appareil de traitement d'informations (20) ; et
dans lequel l'appareil de traitement d'informations (20) comprend :
une partie de réception d'information de réglage configurée pour recevoir l'information de réglage que la première partie de transmission d'information de réglage transmet ;
une partie de communication configurée pour communiquer avec le second dispositif externe ; et
une seconde partie de transmission d'information de réglage configurée pour transmettre l'information de réglage que la partie de réception d'information de réglage a reçue au second dispositif externe,
**caractérisé en ce que** :
l'information de réglage est une information de connexion de manière que le premier dispositif externe établisse une connexion avec un dispositif spécifique dans le réseau sans fil ;
l'appareil de traitement d'informations (20) comprend en outre :
une partie d'obtention d'appareil de relais sans fil configurée pour obtenir un appareil de relais sans fil (2A, 2B) que le second dispositif externe a reconnu dans le réseau sans fil ; et
une partie d'obtention d'information de connexion pour obtenir un élément d'information de connexion correspondant à un appareil de relais sans fil (2A, 2B) que la partie d'obtention d'appareil de relais sans fil obtient, parmi des éléments d'information de connexion que la partie de réception d'information de réglage a reçus ; et
dans lequel la seconde partie de transmission d'information de réglage configurée pour transmettre une information de connexion que la partie d'obtention d'information de connexion obtient au second dispositif externe, et
**en ce que** :
une partie d'obtention d'appareil de relais sans fil est configurée pour obtenir une pluralité d'appareils de relais sans fil (2A, 2B) dans le réseau sans fil que le second dispositif externe a reconnue ;
une partie d'affichage est configurée pour afficher la pluralité d'appareils de relais sans fil (2A, 2B) que la partie d'obtention d'appareil de relais sans fil a obtenue ;
une partie de sélection (24) est configurée pour sélectionner un appareil de relais sans fil (2A, 2B) parmi la pluralité d'appareils de relais sans fil (2A, 2B) qui a été affichée par la partie d'affichage, et
la partie de réception d'information de réglage est configurée pour obtenir une information de connexion correspondant à l'un appareil de relais sans fil (2A, 2B) que la partie de sélection (24) sélectionne à partir du premier dispositif externe.

3. Système de connexion de réseau (1) selon la revendication 2, dans lequel l'appareil de relais sans fil (2A, 2B) est un point d'accès.

4. Système de connexion de réseau (1) selon l'une quelconque des revendications 2 et 3, dans lequel la partie de réception d'information de réglage est configurée pour obtenir l'information de connexion qui a été stockée dans la partie de stockage d'information de réglage (15) du premier dispositif externe quand le second dispositif externe démarre une connexion.

5. Système de connexion de réseau (1) selon l'une quelconque des revendications 2 à 4, dans lequel :
le second dispositif externe est configuré pour amener un propre dispositif à fonctionner comme un appareil de relais sans fil spécifique (2A, 2B) ;
la partie de communication est configurée pour connecter l'appareil de relais sans fil spécifique (2A, 2B) ; et
la seconde partie de transmission d'information de réglage est configurée pour transmettre l'information de réglage au second dispositif externe par l'intermédiaire de la partie de communication après que la partie de communication se connecte avec l'appareil de relais sans fil spécifique (2A, 2B).

6. Procédé de connexion de réseau, dans lequel :
un premier dispositif externe qui a établi une connexion avec un réseau sans fil effectue :
un traitement d'informations de réglage pour stocker des informations de réglage ; et
un premier traitement de transmission d'information de réglage pour transmettre l'information de réglage qui a été stockée dans le traitement de stockage d'information de réglage à un appareil de traitement d'informations (20) ; dans lequel
l'appareil de traitement d'informations (20) qui communique avec le premier dispositif externe effectue :
un traitement de réception d'information de réglage pour recevoir l'information de réglage qui a été transmise dans le premier traitement de transmission d'information de réglage ;
un traitement de communication pour communiquer avec un second dispositif externe ; et
un second traitement de transmission d'information de réglage pour transmettre l'information de réglage qui a été reçue dans le traitement de réception d'information de réglage, à un second dispositif externe qui n'a pas établi une connexion avec le réseau sans fil,
**caractérisé par**
l'information de réglage est une information de connexion de manière que le premier dispositif externe établisse une connexion avec un appareil de relais sans fil (2A, 2B) dans le réseau sans fil ; et
la partie de transmission transmet l'information de connexion que la partie de réception d'information de réglage a obtenue à partir du premier dispositif externe au second dispositif externe, et
une partie d'obtention d'appareil de relais sans fil obtenant une pluralité d'appareils de relais sans fil (2A, 2B) que le second dispositif externe a reconnue dans le réseau sans fil ;
une partie d'affichage affichant la pluralité d'appareils de relais sans fil (2A, 2B) que la partie d'obtention d'appareil de relais sans fil a obtenue ;
une partie de sélection (24) sélectionnant un appareil de relais sans fil (2A, 2B) parmi la pluralité d'appareils de relais sans fil (2A, 2B) qui a été affichée par la partie d'affichage, et
la partie de réception d'information de réglage obtenant une information de connexion correspondant à l'un appareil de relais sans fil (2A, 2B) que la partie de sélection (24) sélectionne à partir du premier dispositif externe.
